# EUROPÄISCHE PATENTSCHRIFT

(11) **EP 2 368 928 B1**
(45) Veröffentlichungstag und Bekanntmachung des Hinweises auf die Patenterteilung: **30.10.2013**
(21) Anmeldenummer: 11159300.0
(22) Anmeldetag: 23.03.2011
(51) Int. Cl.: C08G 18/70, C08G 18/22, C08G 18/28, C08G 18/10

(54) **Wasseremulgierbare Isocyanate mit verbesserten Eigenschaften**
Water-emulsifiable isocyanates with improved characteristics
Isocyanates hydroémulsifiants ayant des caractéristiques améliorées

(30) Priorität: 24.03.2010 EP 10157569
(43) Veröffentlichungstag der Anmeldung: 28.09.2011
(73) Patentinhaber: BASF SE, 67056 Ludwigshafen (DE)
(72) Erfinder: Keller, Peter, 66583 Spiesen-Elversberg (DE); Tuchbreiter, Lydie, Charlotte, NC, 28210 (US); Lucas, Frederic, 67063 Ludwigshafen (DE); Elizalde, Oihana, Charlotte, NC 28279 (US); Steinbrecher, Angelika Maria, 70193 Stuttgart (DE)

(56) Entgegenhaltungen:
- WO-A1-2008/116764
- DE-A1- 10 350 242

## Beschreibung

Die vorliegende Erfindung betrifft ein zweistufiges Verfahren zur Herstellung einer wasseremulgierbaren Polyisocyanatzubereitung bei dem man in einem Schritt (A) ein dispergieraktives Umsetzungsprodukt aus mindestens einem bestimmten Diisocyanat und mindestens einem Polyalkylenetheralkohol herstellt und in einem zweiten Schritt (B) das Umsetzungsprodukt mit einem aliphatischen Polyisocyanat in Gegenwart eines bestimmten Allophanatisierungskatalysators vermischt. Die Erfindung betrifft weiterhin eine wasseremulgierbare Polyisocyanatzubereitung, die nach dem Verfahren erhältlich ist sowie die Verwendung der Zubereitung in wässrigen Beschichtungsmitteln und in Klebstoffdispersionen.

Wasseremulgierbare Polyisocyanatzubereitungen sind prinzipiell bekannt. Eine besondere Rolle spielen wasserdispergierbare Polyisocyanate heute als Vernetzerkomponenten für wasserverdünnbare Zweikomponenten-Polyurethan(2K-PUR)-Lacke. In Kombination mit wässrigen Polyoldispersionen gestatten sie die Formulierung lösemittelfreier Lacksysteme, die bereits bei Raumtemperatur zu qualitativ hochwertigen Beschichtungen aushärten, die hinsichtlich Lösemittel- und Chemikalienbeständigkeit oder mechanischer Belastbarkeit konventionellen Lacken in nichts nachstehen.

Als Polyisocyanatkomponenten in derartigen Zubereitungen werden insbesondere Isocyanatgruppen aufweisende Polyisocyanate auf Basis von aliphatischen und/oder cycloaliphatischen Diisocyanaten eingesetzt. Um die Emulgierbarkeit in Wasser zu erreichen ist es einerseits bekannt, die Polyisocyanate direkt auf geeignete Art und Weise mit hydrophilen Polyoxyalkylengruppen umzusetzen.

Beispiele für derartige Umsetzungen bzw. Zubereitungen sind in EP-A 206 059, EP-A 959 087 oder WO 01/40347 offenbart.

Daneben sind auch zweistufige Verfahren bekannt. EP-A 486 881 offenbart ein zweistufiges Verfahren, bei dem in einem ersten Schritt zunächst ein Emulgator aus einem Diisocyanat und Polyalkylenetheralkoholen synthetisiert wird. Dieser Emulgator wird in einem zweiten Schritt mit mindestens einem aliphatischen Polyisocyanat vermischt, wodurch eine wasseremulgierbare Zubereitung erhalten wird. Ein zweistufiges Verfahren erlaubt letztlich eine gezieltere Steuerung der Eigenschaften im Vergleich zu einstufigen Verfahren. Nachteiligerweise geht jedoch eine gute Emulgierbarkeit, d.h. der Einsatz einer hohen Konzentration an Polyalkylenethergruppen, häufig auf Kosten anderer Eigenschaften, z.B. der Lackhärte.

Aus DE 10350242 ist es bekannt aus Polyalkylenetheralkoholen und Diisocyanaten ein dispergieraktives Produkt herzustellen und dieses anschließend mit aliphatischen Polyisocyanaten unter Ausbildung von Allophanatgruppen umzusetzen.

Nachteilig ist, daß die dort beschriebenen Produkte eine relativ hohe Farbzahl aufweisen, die während der Lagerung noch zunimmt.

WO 2007/063027 beschreibt wasseremulgierbare strahlungshärtbare Polyisocyanate. Als Polyalkylenetheralkohole werden bevorzugt solche mit einem geringen Salzgehalt eingesetzt.

WO 2008/116764 beschreibt die Herstellung wasseremulgierbarer Polyisocyanate durch Trimerisierung mindestens eines Diisocyanats in Gegenwart eines Polyalkylenetheralkohols. Als Polyalkylenetheralkohole werden bevorzugt solche mit einem geringen Salzgehalt eingesetzt.

Aus WO 05/97865 wird die Stabilisierung von Allophanaten, gebildet aus Di- oder Polyisocyanaten mit Polyhydroxyverbindungen, mit Bronstedt-Säuren beschrieben. Die Herstellung der Allophanate erfolgt bevorzugt mit Zink 2-ethylhexanoat, explizit beschriebene Polyhydroxyverbindungen sind Polyalkylenglykole, basenfrei hergestellt per DMC-Katalyse.

Aus WO 2005/97737 ist es bekannt, aus (cyclo)aliphatischen Di- und Polyisocyanaten und Polyhydroxyverbindungen zunächst ein urethangruppenhaltige Prepolymer herzustellen, dessen Urethangrupen anschließend mit Polyisocyanat zu Allophanatgruppen umgesetzt wird, wobei die Katalyse mit Zinkverbindungen erfolgt. Beschriebene Polyhydroxyverbindungen sind Polyalkylenglykole, basenfrei hergestellt per DMC-Katalyse.

WO 2005/95481 beschreibt ein ähnliches Verfahren mit bestimmten Polyhydroxyverbindungen. Die Produkte weisen ein niedrige Farbzahl auf.

EP 712 840 beschreibt die Herstellung von allophanatgruppenhaltigen Polyisocyanaten durch Umsetzung von im Wesentlichen isocyanat- und hydroxygruppenfreien Urethanen mit destillierbaren Polyisocyanaten unter Bildung von Allophanatgruppen und anschließender destillativer Entfernung des nicht umgesetzten Polyisocyanat-Überschusses. Als Katalysatoren sind u.a. Zinkverbindungen genannt.

EP 959087 beschreibt wäßrige Polyisocyanate, enthaltend Polyethylenglycol mit 5-35 EO-Einheiten, gebunden über Allophanatgruppen mit einem Allophanatgruppenanteil von mindestens 60%. Als Allophanatisierungskatalysatoren besonders bevorzugt sind Zink-(II)-n-octanoat, Zink -(II)-2-ethyl-1-hexanoat und/oder Zink -(II)-stearat (S.5, Abs. [0040]).

WO 2001/40347 beschreibt desgleichen mit einem Allophanatgruppenanteil von < 60%.

US 5235018 und EP 524500B1 beschreiben wäßrige Beschichtungszusammensetzung enthaltend nicht wasserdispergierbares oder wasserlösliches Polyisocyanat mit Monoisocyanurat- : Monoallophanatgruppen im Verhältnis 10:1 - 1:5, das Allophanat ist auf Basis eines Monoalkohols mit Molgewicht bis 2500.

Als Katalysatoren werden lediglich Ammonium salze beschrieben.

EP 1 061 091 beschreibt lichtechte Polyurethane mit guter Löslichkeit in unpolaren Lösungsmitteln durch Umsetzung von (cyclo)aliphatischen Isocyanaten mit alkoxygruppenhaltigen Bestandteilen unter Zink-Katalyse.

EP 1 445 271 beschreibt bestimmte Polyisocyanat-Zusammensetzungen, enthaltend Mono- und Polyallophanate mit 20-60 Gewichtsprozent an Produkten mit einem Molgewicht von kleiner 700 und einem Anteil von 40-80 Gewichtsprozent an Produkten mit einem Molgewicht von über 700, sowie einem molaren Verhältnis von Allophanat- zu Isocyanuratgruppen von 100:0 - 75:25. Als Katalysatoren werden u.a. Zinksalze offenbart.

Aufgabe der Erfindung war es daher, ein zweistufiges Verfahren zur Herstellung wasseremulgierbarer Polyisocyanat-Zubereitungen bereit zu stellen, welches gut emulgierbare Produkte bei gleichzeitig guten anwendungstechnischen Eigenschaften, insbesondere verbesserter Lackhärte und Wasserfestigkeit mit verbesserter Farbzahl auch unter Lagerung liefert. Dementsprechend wurde ein zweistufiges Verfahren zur Herstellung einer wasseremulgierbaren Polyisocyanatzubereitung, gefunden bei dem man in einem ersten Schritt
(A) ein dispergieraktives Umsetzungsprodukt (E) aus mindestens einem Diisocyanat, ausgewählt aus der Gruppe von Hexamethylendiisocyanat, 4,4'-Di-(isocyanatocyclohexyl)-methan, 1-Isocyanato-3,3,5-trimethyl-5-(isocyanatomethyl)cyclohexan, 2,4- und 2,6-Toluylendüsocyanat, Tetramethylxylylen-diisocyanat, p-Xylylendiisocyanat, 2,4'- und 4,4'-Diisocyanatodiphenylmethan,
   mit mindestens einem ein- oder mehrwertigen Polyalkylenetheralkohol mit 2 bis 4 C-Atomen in den Alkylengruppen, der eine mindestens 8 Ethylenoxideinheiten aufweisende Polyetherkette umfasst, herstellt und man das erhaltene Umsetzungsprodukt (E) in einem zweiten Verfahrenschritt
(B) mit mindestens einem (cyclo)aliphatischen Polyisocyanat mit einer mittleren NCO-Funktionalität von 2,5 bis 3,5 vermischt,
   wobei man Schritt (B) in Gegenwart eines Allophanatisierungskatalysator ausführt und die Bedingungen so wählt, dass aus (E) und dem Polyisocyanat Allophanatgruppen gebildet werden,
   wobei es sich bei dem Allophanatisierungskatalysator um mindestens eine Zinkverbindung handelt und
   in der Stufe (A) der Polyalkylenetheralkohol einen Gehalt an Ionen von weniger als 100 mmol/kg aufweist.

Weiterhin wurden nach dem erfindungsgemäßen Verfahren erhältliche wasseremulgierbare Polyisocyanatzubereitungen gefunden sowie deren Verwendung in wässrigen Beschichtungsmitteln und Klebstoffdispersionen.

Es wurde gefunden, daß der Salzgehalt des Polyalkylenetheralkohols in Stufe (A) einen Einfluß auf die spätere Farbzahl des Produktes ausübt.

Die erfindungsgemäßen Zubereitungen weisen im Vergleich zu den gemäß EP-A 486 881 hergestellten Produkten verbesserte Emulgierbarkeit bei gleichzeitig verbesserten anwendungstechnischen Eigenschaften auf. Mit den erfindungsgemäßen Zubereitungen hergestellte Lacke weisen eine größere Härte sowie eine verbesserte Wasserfestigkeit auf.

Zu der Erfindung ist im Einzelnen das Folgende auszuführen:

In Schritt (A) des erfindungsgemäßen Verfahrens wird zunächst das dispergieraktive Umsetzungsprodukt (E) aus mindestens einem Diisocyanat und mindestens einem Polyalkylenetheralkohol synthetisiert. (E), beziehungsweise dessen Umsetzungsprodukt mit dem Polyisocyanat zum Allophanat, dient als Emulgator, wenn die nicht wässrige Zubereitung zur Anwendung in einem wässrigen Medium emulgiert oder dispergiert wird. Bei dem Diisocyanat handelt es sich um mindesten eines, ausgewählt aus der Gruppen vonHexamethylendiisocyanat, 4,4'-Di-(isocyanatocyclohexyl)-methan, 1-Isocyanato-3,3,5-trimethyl-5-(isocyanatomethyl)-cyclohexan, 2,4- und 2,6 Toluylendiisocyanat, Tetramethylxylylen-diisocyanat, p-Xylylendiisocyanat oder 2,4'- und 4,4'-Diisocyanatodiphenylmethan.

Bevorzugt sind 2,4'- und 4,4'-Diisocyanatodiphenylmethan (MDI) und 4,4'-Di-(isocyanatocyclohexyl)-methan (HMDI) sowie insbesondere 2,4- und 2,6-Toluylendiisocyanat (TDI). In vielen Fällen haben sich auch Hexamethylendiisocyanat (HDI) und 1-Isocyanato-3,3,5-trimethyl-5-(isocyanatomethyl)cyclohexan (IPDI) bewährt, besonders bevorzugt 2,4- und 2,6-Toluylendiisocyanat (TDI).

Die Diisocyanatkomponente wird mit einem Polyalkylenetheralkohol umgesetzt. Die Alkylengruppe im Polyalkylenetheralkohol hat üblicherweise 2 bis 4 C-Atome, typisch sind -CH₂-CH(CH₃)-, -(CH₂)₄- und bevorzugt -(CH₂)₂-. Die Herstellung der Polyalkylenetheralkohole kann in bekannter Art und Weise durch Alkoxylierung von geeigneten Startern, beispielsweise Alkoholen, erfolgen. Es können polyfunktionelle Starter oder bevorzugt monofunktionelle Starter eingesetzt werden, und dementsprechend ist auch der Polyalkylenetheralkohol mehr- oder bevorzugt einwertig. Beispiele geeigneter Startermoleküle umfassen Glykolhexanol, 3-Methyl-3-Hydroxymethyloxethan, Phenol, Ethylenglykol, Propylenglykol, Anilin, Pentaerythrit, Trimethylolpropan oder Glycerin. Bevorzugt sind C₁-C₆-Alkanole wie Methanol, Ethanol, n-Propanol oder n-Butanol. Üblicherweise erfolgt die Herstellung unter saurer oder basischer Katalyse. Für viele Anwendungen der Polyalkylenetheralkohole ist eine anschließende Entsalzung der Produkte üblich. Es stellt ein erfindungsgemäßes Merkmal dar, daß der eingesetzte Polyalkylenetheralkohol eine Basizität von weniger als 5 mmol/kg aufweist, bevorzugt weniger als 4, besonders bevorzugt weniger als 3, ganz besonders bevorzugt weniger als 2 und insbesondere weniger als weniger als 1 mmol/kg aufweist. Die Polyalkylenetherketten können gemischt, beispielsweise aus Ethylenoxid- und Propylenoxideinheiten aufgebaut sein. Die Ketten umfassen im Regelfalle 8 bis 70, bevorzugt 10 bis 20 Ethylenoxideinheiten. Gute Ergebnisse werden erzielt, wenn der Polyalkylenetheralkohol mindestens 60 Gew.-%, bevorzugt mindestens 80 Gew. % an Ethylenoxideinheiten enthält. Besonders bevorzugt sind reine Polyethylenoxidketten.

Das Zahlenverhältnis von OH-Gruppen zu NCO-Gruppen in Schritt (A) beträgt üblicherweise 0,6 bis 1,2, bevorzugt 0,8 bis 1,2, besonders bevorzugt 0,9 bis 1,1 und ganz besonders bevorzugt ca. 1:1. Diese Umsetzung des Polyalkylenetheralkohols mit dem Diisocyanat ist an sich bekannt und verläuft üblicherweise bei Temperaturen von 10 bis 150, vorzugsweise von 20 bis 100°C ab. Die Reaktionsdauer ist im allgemeinen so bemessen, dass die mit Isocyanatgruppen reaktionsfähigen Gruppen des Polyalkylenetheralkohols zu mindestens 90 mol % mit Isocyanat umgesetzt sind. Die Umsetzung kann durch die Mitverwendung an sich bekannter, katalytisch wirksamer Substanzen beschleunigt werden. Es stellt jedoch eine bevorzugte Ausführungsform der vorliegenden Erfindung dar, Diisocyanat und Polyalkylenetheralkohol entweder unkatalysiert umzusetzen oder, wenn eine Katalyse erforderlich ist, dafür denselben Katalysator (Allophanatisierungskatalysator) wie im Schritt (B) zu verwenden:

In Schritt (B) des erfindungsgemäßen Verfahrens wird Umsetzungsprodukt (E) mit einem aliphatischen Polyisocyanat mit einer mittleren NCO-Funktionalität von 2,5 bis 3,5 abgemischt und zum Allophanat umgesetzt.

Schritt (B) schließt sich bevorzugt unmittelbar an Schritt (A) an; es ist aber auch möglich, (E) zunächst zu isolieren und/oder zu reinigen und danach in einem neuen Ansatz mit dem Polyisocyanat umzusetzen.

Das aliphatische Polyisocyanat weist im allgemeinen einen NCO-Gehalt von 5 bis 30, vorzugsweise von 10 bis 25 Gew.-% auf.

Aliphatische Polyisocyanate im Sinne der Erfindung sind:
1. Isocyanuratgruppen aufweisende Polyisocyanate auf Basis von aliphatischen und/oder cycloaliphatischen Diisocyanaten. Besonders bevorzugt sind die entsprechenden Isocyanato-Isocyanurate auf Basis von 1,6-Diisocyanatohexan und/oder 1-Isocyanato-3,3,5-trimethyl-5-(isocyanatomethyl)cyclohexan (Isophorondiisocyanat (IPDI). Die Herstellung derartiger Isocyanuratgruppen aufweisender Polyisocyanate ist beispielsweise in DE-A 2 616 416, EP-A 3765, EP-A 10 589, EP-A 47 452, US-A 4 288 586 oder US-A 4 324 879 beschrieben. Grundsätzlich können in der erfindungsgemäßen Polyisocyanat-Zubereitung nicht nur diese besonders bevorzugten Verbindungen, sondern beliebige Isocyanuratgruppen aufweisende Polyisocyanate auf Basis aliphatischer und/oder cycloaliphatischer Diisocyanate vorliegen. Bei geeigneten Isocyanato-Isocyanuraten handelt es sich insbesondere um einfache Tris-isocyanatoalkyl- (bzw. - cycloalkyl-)isocyanurate der Formel 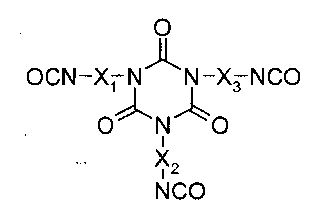 bzw. deren Gemische mit ihren höheren, mehr als einen Isocyanuratring aufweisenden Homologen, wobei in dieser Formel X₁, X₂ und X₃ für gleiche oder verschiedene Reste stehen und den dem Ausgangsdiisocyanat zugrundeliegenden Kohlenwasserstoffrest bedeuten. Die Isocyanato-Isocyanurate weisen im allgemeinen einen NCO-Gehalt von 10 bis 30, vorzugsweise 15 bis 25 Gew.-% und eine mittlere NCO-Funktionalität von 2,6 bis 3,5 auf.

Aliphatische Polyisocyanate im Sinne der Erfindung sind ferner:
2. Biuretgruppen aufweisende Polyisocyanate mit aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 3,5 auf.

Aliphatische Polyisocyanate im Sinne der Erfindung sind ferner:
3. Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an IPDI mit einfachen mehrwertigen Alkoholen wie z.B. Trimethylolpropan, Glycerin, 1,2-Dihydroxypropan oder deren Gemischen erhalten werden können. Diese Urethan- und/oder Allophanatgruppen aufweisenden Polyisocyanate weisen im allgemeinen einen NCO-Gehalt von 12 bis 20 Gew.-% und eine mittlere NCO-Funktionalität von 2,5 bis 3 auf.

Bevorzugt werden Polyisocyanate der Gruppen 1 und 2 eingesetzt. Es kann selbstverständlich auch ein Gemisch der genannten Polyisocyanate verwendet werden.

Das Umsetzungsprodukt (E) wird üblicherweise in einer solchen Menge eingesetzt, dass die wasseremulgierbare Polyisocyanatzubereitung 1 bis 25 Gew.-%, bevorzugt 5-20 Gew.-% und besonders bevorzugt 10-15 Gew.-% davon enthält.

Hierzu wird Schritt (B) in Gegenwart eines geeigneten Allophanatisierungskatalysators ausgeführt. Die Zugabe des Allophanatisierungskatalysators kann hierbei vor oder während des Schrittes (B) erfolgen. Es ist aber auch möglich, den Allophanatisierungskatalysator bereits vor oder während des Schrittes (A) zuzugeben. Da die NCO-Gruppen bevorzugt mit vorhandenen OH-Gruppen reagieren ist die Bildung von Allophanatgruppen in Schritt (A) aufgrund der gewählten Stöchiometeie im Regelfalle vernachlässigbar.

Allophanatisierungskatalysatoren sind dem Fachmann prinzipiell bekannt.

Zur Ausführung des erfindungsgemäßen Verfahrens geeignete Allophanatisierungskatalysatoren sind Zinkverbindungen, wie Zink-(II)-n-octanoat, Zink-(II)-2-ethyl-1-hexanoat oder Zink-(II)-acetylacetonat und insbesondere Zink(II)-neodekanoat.

Diese Katalysatoren kommen beim erfindungsgemäßen Verfahren in einer Menge von 0,001 bis 5 Gew.-%, vorzugsweise 0,005 bis 1 Gew.-%, bezogen auf das Gesamtgewicht der Reaktionspartner zum Einsatz.

Im Regelfalle wird die Allophanatisierung bei erhöhten Temperaturen, beispielsweise bei 40 bis 140°C, bevorzugt 60 bis 100°C durchgeführt. Es stellt eine bevorzugte Ausführungsform des vorliegenden Verfahrens dar, daß der Reaktionsschritt (B) bei einer mindestens 10 °C höheren Reaktionstemperatur durchgeführt wird als der Reaktionsschritt (A), bevorzugt mindestens 15 °C höher und besonders bevorzugt mindestens 20 °C höher.

Dementsprechend wird bevorzugt der Reaktionsschritt (A) bei einer Temperatur von 40 bis 70 °C, bevorzugt 50 bis 65 °C durchgeführt und der Reaktionsschritt (B) entsprechend höher. Es ist überraschend, daß die Farbzahl des Produktes sich verbessert, wenn es zuvor einer höheren Temperatur ausgesetzt wird.

Der Verlauf der Umsetzung kann z.B durch titrimetirische Bestimmung des NCO-Gehaltes verfolgt werden.

Der Grad der Allophanatisierung wird vom Fachmann je nach den gewünschten Eigenschaften der wasseremulgierbaren Zubereitung bestimmt. Es hat sich bewährt, dass mindestens 10 mol % der Urethangruppen des in Schritt (A) gebildeten Umsetzungsproduktes (E) zu Allophanatgruppen umgesetzt werden. Bevorzugt beträgt der Umsetzungsgrad 15 bis 100 mol % und besonders bevorzugt 20 bis 100 mol %.

Das Vermischen und Umsetzen sollte bevorzugt unter intensivem Rühren erfolgen. Um zu hohe Viskositäten zu vermeiden, können auch noch inerte Lösemittel anwesend sein.

Die so hergestellte Polyisocyanatzubereitung wird vorzugsweise in Substanz verwendet. Selbstverständlich kann man der Zubereitung vor ihrer Verwendung auch geringe Mengen, d.h. beispielsweise 1 bis 40 Gew.-% bezogen auf die lösungsmittelfreie Zubereitung, eines organischen Lösungsmittels wie z.B. Ethylacetat, Butylacetat, Aceton, Methoxypropylacetat, Propylencarbonat oder Methylethylketon zusetzen, um die Viskosität zu reduzieren. Es können selbstverständlich auch Mischungen aus den genannten Lösemitteln eingesetzt werden. Ferner ist es möglich, die erfindungsgemäßen Polyisocyanatzubereitungen zu wässrigen Emulsionen bzw. Dispersionen mit einem Wassergehalt von im allgemeinen 90 bis 35 Gew.-% zu verarbeiten. Die Herstellung dieser Dispersionen bzw. Emulsionen erfolgt durch einfaches Vermischen der Polyisocyanatzubereitung mit Wasser. Es sind dabei nur geringe Scherkräfte erforderlich, was ein großer Vorteil für den Verarbeiter ist. Es können die dem Fachmann bekannten Mischeinrichtungen wie einfache Rühreinrichtungen eingesetzt werden.

Die erfindungsgemäße Polyisocyanatzubereitung eignet sich zur Modifizierung von wässrigen Beschichtungsmitteln für Metall, Holz, Papier, Pappe, Kunststoff, Textilien und insbesondere Leder auf Basis von wässrigen Dispersionen oder Lösungen eines Feststoffgehaltes von 5 bis 40 Gew.-%, vorzugsweise von 5 bis 20 Gew.-%. Als Beschichtungsmittel kommen die an sich bekannten wässrigen Dispersionen von Homo-und Copolymerisaten olefinisch ungesättigter Monomerer oder Polyurethanen oder auch Lösungen von Naturstoffen, wie z.B. von Casein, in Betracht.

Die erfindungsgemäßen Polyisocyanatzubereitungen werden den wässrigen Beschichtungsmitteln im allgemeinen in einer Menge von 1 bis 25, vorzugsweise von 2,5 bis 20 Gew.-%, bezogen auf den Feststoffgehalt des Beschichtungsmittels, zugesetzt.

Sie werden in bekannter Weise durch z.B. Spritzen auf das Substrat aufgebracht. Bei der Beschichtung von Leder oder Kunstleder mit derart modifizierten Dispersionen oder Lösungen ergeben sich besonders gute Nassreibechtheiten und Knickbeständigkeiten.

Die erfindungsgemäße Polyisocyanatzubereitung eignet sich insbesondere zur Modifizierung von wässrigen Klebstoffen, beispielsweise auf Basis von wässrigen Dispersionen eines Feststoffgehalts entsprechend eines Bindemittelgehaltes von 10 bis 65 Gew.-%, vorzugsweise 20 bis 60 Gew.-%, wie Naturlatex, wässrigen Dispersionen von Homo- oder Copolymerisaten olefinisch ungesättigter Monomerer und den an sich bekannten wässrigen Polyurethandispersionen.

Geeignete Dispersionen von Homo- oder Copolymerisaten olefinisch ungesättigter Monomerer sind z.B. an sich bekannte Dispersionen von Homo- oder Copolymerisaten auf Basis von Vinylestern von Carbonsäuren mit 2 bis 18, vorzugsweise 2 bis 4 Kohlenstoffatomen wie insbesondere Vinylacetat, gegebenenfalls mit bis zu 70 Gew.-% bezogen auf Gesamtmenge an olefinisch ungesättigten Monomeren, an anderen olefinisch ungesättigten Monomeren und/oder von Homo- oder Copolymerisaten von (Meth)Acrylsäureestern von Alkoholen mit 1 bis 18, vorzugsweise 1 bis 4 Kohlenstoffatomen wie insbesondere (Meth)Acrylsäure-, -methyl-, -ethyl-, -propyl-, -hydroxyethyl-oder -hydroxypropyl-estern, gegebenenfalls zusammen mit bis zu 70 Gew.-% an anderen olefinisch ungesättigten Monomeren und/oder Butadien-Styrol-Copolymerisaten mit einem Gehalt an Butadien von ca. 20 bis 60 Gew.-% und/oder von anderen Dien-Polymerisaten oder -Copolymerisaten wie Polybutadien oder Mischpolymerisaten von Butadien mit anderen olefinisch ungesättigten Monomeren wie z.B. Styrol, Acrylnitril und/oder Methacrylnitril und/oder wässrige Dispersionen von Polymerisaten bzw. Copolymerisaten des 2-Chlor-butadien-1,3, gegebenenfalls mit anderen olefinisch ungesättigten Monomeren der oben beispielhaft genannten Art, z.B. solchen eines Chlorgehalts von ca. 30 bis 40 Gew. %, insbesondere eines Chlorgehalts von ca. 36 Gew.-%.

Bevorzugt werden wässrige Dispersionen von Copolymerisaten aus 90 bis 99,5 Gew.-% Acrylaten oder Methacrylaten von 1 bis 4 C-Atomen enthaltenden Alkanolen und 0,5 bis 10 Gew.%, jeweils bezogen auf das Copolymerisat, von Hydroxyalkylacrylaten und -methacrylaten mit 2 bis 20 C-Atomen im Hydroxyalkylrest, wie Hydroxyethyl-, Hydroxypropyl- oder Hydroxybutylacrylat oder -methacrylat. Solche Dispersionen sind an sich bekannt und in üblicher Weise durch Emulsionspolymerisation herstellbar (s. Houben-Weyl, Methoden der organischen Chemie, 4. Auflage, Bd. E 20, S.217 ff.).

Geeignete wässrige Polyurethandispersionen sind solche der an sich bekannten Art, wie sie z.B. in US-A 3 479 310, GB-A 1 076 688, US-A 4 108 814, US-A 4 108 814, US-A 4 092 286, DE-A 2 651 505, US-A 4 190 566, DE-A 2 732 131 oder DE-A 2 811 148 beschrieben sind.

Die eingesetzten wässrigen Klebstoffe können die in der Klebstofftechnologie üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäuren, Ammonium- oder Natriumpolyacrylsäuresalzen eingesetzt werden, wobei die Netzmittel im allgemeinen in Mengen von 0,2 bis 0,6 Gew.-%, bezogen auf Füllstoff, zugesetzt werden.

Weitere geeignete Hilfsmittel sind z.B. in Mengen von 0,01 bis 1 Gew.-%, bezogen auf Klebstoff, einzusetzende organische Verdickungsmittel wie z.B. Zellulose-Derivate, Alginate, Stärke oder Stärkederivate oder Polyacrylsäure oder in Mengen von 0,05 bis 5 Gew. %, bezogen auf Klebstoff, einzusetzende anorganische Verdickungsmittel wie z.B. Bentonite:

Auch Fungizide zur Konservierung können den Klebstoffen zugesetzt werden. Diese kommen im allgemeinen in Mengen von 0,02 bis 1 Gew.-%, bezogen auf Klebstoff, zum Einsatz. Geeignete Fungizide sind beispielsweise Phenol- und Kresol-Derivate oder Zinn-organische Verbindungen.

Klebrigmachende Harze wie z.B. Naturharz oder modifizierte Harze wie Kolophoniumester oder synthetische Harze wie Phthalatharze können ebenfalls im Klebstoff in bekannten Mengen vorliegen.

Auch Lösungsmittel wie beispielsweise Toluol, Xylol, Butylacetat, Methylethylketon, Ethylacetat, Dioxan oder deren Gemische oder Weichmacher wie beispielsweise solche auf Adipat-, Phthalat- oder Phosphat-Basis können den wässrigen Klebstoffdispersionen zugesetzt werden.

Die erfindungsgemäßen Polyisocyanat-Zubereitungen werden den wässrigen Klebstoffen im allgemeinen in einer Menge von 1 bis 20, vorzugsweise 2 bis 10 Gew.-%, bezogen auf das Bindemittel der wässrigen Klebstoffdispersion, zugesetzt.

Dazu kann man die erfindungsgemäße nichtwässrige Polyisocyanat-Zubereitung in die Klebstoffdispersion in bekannter Weise einrühren. In manchen Fällen werden gute Ergebnisse erzielt, wenn man zunächst eine wässrige Dispersion herstellt und diese mit der Klebstoffdispersion vermischt.

Die so modifizierten wässrigen Klebstoffe eignen sich zum Verkleben beliebiger Werkstoffe gleicher oder verschiedener Art, z.B. zum Verkleben von Holz, Papier, Kunststoffen, Textilien, Leder und anorganischen Materialien, wie Keramik, Steingut oder Asbestzement.

Die folgenden Beispiele sollen die Erfindung näher erläutern.

### Isocyanat A:

HDI-Isocyanurat mit einem NCO-Gehalt von 22,2% und einer Viskosiät von 2800 mPa*s bei 23°C (Basonat® HI 100 der BASF SE).

### Isocyanat B:

Mischung aus 80-Teilen 2,4-Toluylendiisocyanat und 20 Teilen 2,6-Toluylendiisocyanat

### Polyether A:

Auf Methanol gestartetes und unter Kaliumhydroxidkatalyse hergestelltes, monofunktionelles Polyethylenoxid mit einer OH-Zahl von 112 (nach DIN 53240) und einem Molekulargewicht von 500 g/mol. Die noch anwesenden basischen Katalysatorreste wurden anschließend mit Essigsäure neutralisiert und das Produkt entsalzt. Hierbei wird auch gebildetes Kaliumacetat entfernt.

### Polyether B:

Auf Methanol gestartetes und unter Kaliumhydroxidkatalyse hergestelltes, monofunktionelles Polyethylenoxid mit einer OH-Zahl von 112 (nach DIN 53240) und einem Molekulargewicht von 500 g/mol. Die noch anwesenden basischen Katalysatorreste wurden anschließend mit Essigsäure neutralisiert. Die Basizität des Produktes wird durch Titration mit HCI zu 100 mmol/kg bestimmt. Vor Verarbeitung wird Polyether B mit para-Toluolsulfonsäure auf eine Basizität von 12,5 mmol/kg eingestellt.

### Hazen-Farbzahl:

Verfahren zur Bestimmung der Gelbtönung technischer Flüssigkeiten nach DIN ISO 6271. Als Standard wird eine saure Lösung von Kaliumhexachloroplatinat eingesetzt.

### Dispergierbarkeit:

Zur Bestimmung der Dispergierbarkeit des Produktes werden Teilchengröße und Polydispergierbarkeit in Wasser bestimmt. Je kleiner die Teilchengröße und Polydispersität desto besser ist die Dispergierbarkeit des Produktes in Wasser.

### Vergleichsbeispiel 1 (analog Beispiel 2 in DE 103 50 242)

Beispiel 2 der DE 103 50 242 wurde mit Polyether B und Isocyanat B durchgeführt. Die Produktdaten sind in der Tabelle unten dargestellt.

### Vergleichsbeispiel 2 (analog Beispiel 1 in DE 103 50 242)

Beispiel 1 der DE 103 50 242 wurde mit Polyether A, Isocyanat A und Isocyanat B durchgeführt. Die Produktdaten sind in der Tabelle unten dargestellt.

### Vergleichsbeispiel 3 (analog Vergleich 1 in DE 103 50 242)

Vergleichsbeispiel 1 der DE 103 50 242 wurde mit Polyether A und Isocyanat A durchgeführt. Die Produktdaten sind in der Tabelle unten dargestellt.

### Beispiel 1 (erfindungsgemäß) - Reaktion bei 60°C

Die in der Tabelle angegebene Menge Polyether und Isocyanat wurde mit dem angegebenen Katalysator Zink neodecanoat für die angegebene Reaktionsdauer bei der angegebenen Reaktionstemperatur umgesetzt. Die Produktdaten sind in der Tabelle unten dargestellt.

### Beispiel 2 (erfindungsgemäß) - Reaktion bei 85°C

Die in der Tabelle angegebene Menge Polyether und Isocyanat wurde mit dem angegebenen Katalysator Zink neodecanoat für die angegebene Reaktionsdauer bei der angegebenen Reaktionstemperatur umgesetzt. Die Produktdaten sind in der Tabelle unten dargestellt.

### Stufe 1:

Es wurden 150 g Polyether A oder B mit 26 g Isocyanat B bei 60-85°C, gegebenenfalls unter Zusatz von Katalysator umgesetzt, bis kein freies NCO mehr nachgewiesen werden konnte.

### Stufe 1

| | | | | | |
|---|---|---|---|---|---|
| Beispiel | Polyether | Zugesetzter Katalysator | Katalysatormenge (g) | Reaktionstemp. (°C) | Reaktionszeit (min) |
| Vergleich 1 | B | p-Toluolsul-fonsäure | 0,40 | 30 | 30 |
| Vergleich 2 | A | - | - | 60 | 480 |
| Vergleich 3 | A | - | - | 60 | 480 |
| Beispiel 1 | A | Zn-neodec. | 0,15 | 60 | 60 |
| Beispiel 2 | A | Zn-neodec. | 0,15 | 60 | 60 |

### Stufe 2:

48,7 g des Produktes aus Stufe 1 wurden mit 250g Isocyanat A gemischt, gegebenenfalls wurde Katalysator zugegeben. Die Umsetzung erfolgte bei 60-85°C.

### Stufe 2

| Beispiel | Zugesetzter Katalysator | Katalysatormenge (g) | Reaktionstemp. (°C) | Reaktionszeit (h) | Teilchengröße (nm) |
|---|---|---|---|---|---|
| Vergleich 1 | p-Toluolsulfon-säure | 0,15 | 65 | 1 | 220 |
| Vergleich 2 | Kaliumacetat | 0,06 | 60 | 3 | 153 |
| Vergleich 3 | - | - | 85 | 10 | 4000 |
| Beispiel 1 | aus Stufe 1 | - | 60 | 3 | Nicht disp. |
| Beispiel 2 | aus Stufe 1 | - | 85 | 10 | 164 |

### Produktdaten:

| Beispiel | NCO (%) | Viskosität (mPa*s) | Farbzahl (Hazen) - Sofort | Farbzahl (Hazen) - 4 Wochen, 50°C |
|---|---|---|---|---|
| Vergleich 1 | 17,1 | | 88 | 247 |
| Vergleich 2 | 16,3 | 8275 | 638 | 889 |
| Vergleich 3 | 18,1 | 2830 | trüb | 97 |
| Beispiel 1 | 18,0 | 3864 | trüb | 102 |
| Beispiel 2 | 17,2 | 4561 | 51 | 76 |

## Patentansprüche

1. Verfahren zur Herstellung einer wasseremulgierbaren Polyisocyanatzubereitung, bei dem man in einem ersten Schritt
(A) ein dispergieraktives Umsetzungsprodukt (E) aus mindestens einem Diisocyanat, ausgewählt aus der Gruppe von Hexamethylendiisocyanat, 4,4'-Di-(isocyanatocyclohexyl)-methan, 1-Isocyanato-3,3,5-trimethyl-5-(isocyanatomethyl)cyclohexan, 2,4- und 2,6-Toluylendiisocyanat, Tetramethylxylylen-diisocyanat, p-Xylyfendiisocyanat, 2,4'- und 4,4'-Diisocyanatodiphenylmethan,
mit mindestens einem ein- oder mehrwertigen Polyalkylenetheralkohol mit 2 bis 4 C-Atomen in den Alkylengruppen, der eine mindestens 8 Ethylenoxideinheiten aufweisende Polyetherkette umfasst, herstellt und man das erhaltene Umsetzungsprodukt (E) in einem zweiten Verfahrenschritt
(B) mit mindestens einem (cyclo)aliphatischen Polyisocyanat mit einer mittleren NCO-Funktionalität von 2,5 bis 3,5 vermischt,
wobei man Schritt (B) in Gegenwart eines Allophanatisierungskatalysator ausführt und die Bedingungen so wählt, dass aus (E) und dem Polyisocyanat Allophanatgruppen gebildet werden,
**dadurch gekennzeichnet, daß** es sich bei dem Allophanatisierungskatalysator um mindestens eine Zinkverbindung handelt und
in der Stufe (A) der Polyalkylenetheralkohol einen Gehalt an Ionen von weniger als 100 mmol/kg aufweist.

2. Verfahren gemäß Anspruch 1, **dadurch gekennzeichnet, daß** der Allophanatisierungskatalysator ausgewählt ist aus der Gruppe bestehend aus Zink-(II)-n-octanoat, Zink-(II)-2-ethyl-1-hexanoat, Zink-(II)-acetylacetonat und Zink(II)-neodekanoat.

3. Verfahren gemäß Anspruch 1, **dadurch gekennzeichnet, daß** es sich bei dem Allophanatisierungskatalysator um Zink(II)-neodekanoat handelt.

4. Verfahren gemäß Anspruch 1, **dadurch gekennzeichnet, daß** der eingesetzte Polyalkylenetheralkohol eine Basizität von weniger als 2 mmol/kg aufweist.

5. Verfahren gemäß einem der vorstehendn Ansprüche, **dadurch gekennzeichnet, daß** man den Reaktionsschritt (B) bei einer mindestens 10 °C höheren Reaktionstemperatur durchführt als den Reaktionsschritt (A).

## Claims

1. A process for preparing a water-emulsifiable polyisocyanate formulation, in which in a first step
(A) a dispersing-active product (E) of the reaction of at least one diisocyanate selected from the group consisting of hexamethylene diisocyanate, 4,4'-di(isocyanatocyclohexyl)methane, 1-isocyanato-3,3,5-trimethyl-5-(isocyanatomethyl)cyclohexane, 2,4- and 2,6-tolylene diisocyanate, tetramethylxylylene diisocyanate, p-xylylene diisocyanate, 2,4'- and 4,4'-diisocyanatodiphenylmethane
with at least one mono- or polyhydric polyalkylene ether alcohol having 2 to 4 carbon atoms in the alkylene groups and comprising a polyether chain containing at least 8 ethylene oxide units is prepared and in a second step of the process (B) the resultant reaction product (E) is mixed with at least one (cyclo)aliphatic polyisocyanate having an average NCO functionality of from 2.5 to 3.5,
step (B) being performed in the presence of an allophanatization catalyst and the conditions being chosen such that allophanate groups are formed from (E) and the polyisocyanate,
wherein the allophanatization catalyst is at least one zinc compound and
the polyalkylene ether alcohol in stage (A) has a content of ions of less than 100 mmol/kg.

2. The process according to claim 1, wherein the allophanatization catalyst is selected from the group consisting of zinc(II) n-octanoate, zinc(II) 2-ethyl-1-hexanoate, zinc(II) acetylacetonate and zinc(II) neodecanoate.

3. The process according to claim 1, wherein the allophanatization catalyst is zinc(II) neodecanoate.

4. The process according to claim 1, wherein the polyalkylene ether alcohol used has a basicity of less than 2 mmol/kg.

5. The process according to any of the preceding claims, wherein reaction step (B) is performed at a reaction temperature at least 10°C higher than reaction step (A).

## Revendications

1. Procédé pour la préparation d'une composition de polyisocyanate émulsionnable dans l'eau, dans lequel, dans une première étape
(A) un produit de transformation (E) actif en dispersion est préparé à partir d'au moins un diisocyanate, choisi dans le groupe formé par l'hexaméthylènediisocyanate, le 4,4'-di-(isocyanatocyclohexyl)-méthane, le 1-isocyanato-3,3,5-triméthyl-5-(isocyanatométhyl)cyclohexane,
le 2,4-toluylènediisocyanate et le 2,6-toluylènediisocyanate, le tétraméthylxylylènediisocyanate, le p-xylylènediisocyanate, le 2,4'-diisocyanatodiphénylméthane et le 4,4'-diisocyanatodiphénylméthane, avec au moins un polyalkylène-éther-alcool monovalent ou polyvalent comprenant 2 à 4 atomes de carbone dans les groupes alkylène, qui comprend une chaîne polyéther comprenant au moins 8 unités d'oxyde d'éthylène, et dans une deuxième étape, le produit de transformation (E) obtenu
(B) est mélangé avec au moins un polyisocyanate (cyclo)aliphatique présentant une fonctionnalité NCO moyenne de 2,5 à 3,5,
l'étape (B) étant réalisée en présence d'un catalyseur d'allophanatisation et les conditions étant choisies de manière telle que des groupes allophanate sont formés à partir de (E) et du polyisocyanate
**caractérisé en ce qu'**il s'agit, pour le catalyseur d'allophanatisation, d'au moins un composé du zinc et dans l'étape (A), le polyalkylène-étheralcool présente une teneur en ions inférieure à 100 mmoles/kg.

2. Procédé selon la revendication 1, **caractérisé en ce que** le catalyseur d'allophanatisation est choisi dans le groupe constitué par le n-octanoate de zinc (II), le 2-éthyl-1-hexanoate de zinc (II), l'acétylacétonate de zinc (II) et le néodécanoate de zinc (II).

3. Procédé selon la revendication 1, **caractérisé en ce qu'**il s'agit, pour le catalyseur d'allophanatisation, de néodécanoate de zinc (II).

4. Procédé selon la revendication 1, **caractérisé en ce que** le polyalkylène-étheralcool utilisé présente une basicité de moins de 2 mmoles/kg.

5. Procédé selon l'une quelconque des revendications précédentes, **caractérisé en ce qu'**on réalise l'étape de réaction (B) à une température de réaction supérieure d'au moins 10°C à celle de l'étape de réaction (A).
